(19) Europäisches Patentamt
European Patent Office
Office européen des brevets

(11) Veröffentlichungsnummer: **0 572 006 B1**

(12) **EUROPÄISCHE PATENTSCHRIFT**

(45) Veröffentlichungstag der Patentschrift: **15.11.95**

(51) Int. Cl.[6]: **C08L 83/04**, C08J 3/03

(21) Anmeldenummer: **93108588.0**

(22) Anmeldetag: **27.05.93**

Die Akte enthält technische Angaben, die nach dem Eingang der Anmeldung eingereicht wurden und die nicht in dieser Patentschrift enthalten sind.

# (54) Wässrige Dispersionen von Organopolysiloxanen.

(30) Priorität: **27.05.92 DE 4217561**

(43) Veröffentlichungstag der Anmeldung:
**01.12.93 Patentblatt 93/48**

(45) Bekanntmachung des Hinweises auf die Patenterteilung:
**15.11.95 Patentblatt 95/46**

(84) Benannte Vertragsstaaten:
**AT BE CH DE ES FR GB IT LI NL SE**

(56) Entgegenhaltungen:
**EP-A- 0 169 098**
**EP-A- 0 350 413**
**EP-A- 0 366 133**
**EP-A- 0 419 986**
**EP-A- 0 420 522**

(73) Patentinhaber: **WACKER-CHEMIE GMBH**
**Hanns-Seidel-Platz 4**
**D-81737 München (DE)**

(72) Erfinder: **Braun, Rudolf**
**Albererweg 9**
**W-8261 Kastl (DE)**
Erfinder: **Braunsperger, Karl**
**Unterhadermark 86**
**W-8263 Burghausen (DE)**
Erfinder: **Söllradl, Herbert, Dr.**
**Forststrasse 27**
**W-8261 Emmerting (DE)**
Erfinder: **Oberneder, Stefan, Dr.**
**Kapuzinergasse 237**
**W-8263 Burghausen (DE)**
Erfinder: **Braunsperger, Robert**
**Stadtplatz 53**
**W-8263 Burghausen (DE)**

**EP 0 572 006 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wäßrige Dispersionen von Organopolysiloxanen, die sich nach Entfernen von Wasser in Elastomere überführen lassen, Verfahren zu deren Herstellung und deren Verwendung.

Maßnahmen zum Umweltschutz zwingen in zunehmendem Maße zur Vermeidung organischer Lösungsmittel in chemischen Zubereitungen. Demzufolge finden immer mehr wäßrige Systeme Verwendung.

Wäßrige Dispersionen von Organopolysiloxanen sind an sich vielfach bekannt. Beispielsweise wird in US-PS 4,221,688 (R.D. Johnson, Dow Corning Corporation; ausgegeben am 9. September 1980) die Herstellung von wäßrigen Silicondispersionen auf der Basis von hydroxyliertem Diorganopolysiloxan, kolloidalem Siliciumdioxid und einem organischen Amin oder Natriumhydroxid beschrieben.

Aus US-PS 4,244,849 (J.C. Saam, Dow Corning Corporation; ausgegeben am 13. Januar 1981) sind wäßrige Silicondispersionen bekannt, die durch Zugabe von Alkalisilicat zu einer anionisch stabilisierten wäßrigen Emulsion von Hydroxyendgruppen aufweisendem Polydiorganosiloxan erhalten werden. In US-PS 4,816,506 (N. Gamon, Wacker-Chemie GmbH; ausgegeben am 28. März 1989) sowie US-PS 5,045,231 (R. Braun, Wacker-Chemie GmbH; ausgegeben am 3. September 1991) bzw. der entsprechenden DE 39 32 025 A (ausgegeben am 4. April 1991) sind wäßrige Dispersionen dargelegt, die zusätzlich zu in den endständigen Einheiten Hydroxylgruppen aufweisenden Polydiorganosiloxanen und (Organo)-metallverbindungen Siliconat enthalten. In EP 366 133 A wird ein Verfahren zur Herstellung von wäßrigen Emulsionen von festen Organopolysiloxanen ohne Verwendung organischer Lösungsmittel beschrieben, indem das feste Siloxan in einem flüssigen Siloxan gelöst und diese Lösung emulgiert wird.

Es bestand die Aufgabe, wäßrige Dispersionen von Organopolysiloxanen bereitzustellen, die stabil und ohne lange Lagerung gebrauchsfertig sind und die es erlauben, auf relativ einfache Weise sowie innerhalb kurzer Zeit Elastomere herzustellen. Diese Aufgabe wird durch die Erfindung gelöst.

Gegenstand der Erfindung sind wäßrige Dispersionen von Organopolysiloxanen, herstellbar unter Verwendung der Ausgangsstoffe

(A) kondensationsfähige Gruppen aufweisendes Organopolysiloxan,
(B) Kondensationskatalysator,
(C) Organopolysiloxanharz mit einem Molekulargewicht von maximal 20 000,
(D) basischen Stickstoff aufweisende Verbindungen und
(E) Polyvinylalkohol, vorzugsweise mit einem Molekulargewicht zwischen 20 000 und 100 000 und einer Verseifungszahl von größer 100, wobei A, C und D verschieden sind.

Die erfindungsgemäß eingesetzten, kondensationsfähige Gruppen aufweisenden Organopolysiloxane (A) sind vorzugsweise solche der Formel

$$RO\text{-}[SiR^1{}_2O]_n\text{-}R \qquad (I),$$

worin

R gleich oder verschieden sein kann und Wasserstoffatom oder Alkylrest mit 1 bis 6 Kohlenstoffatom(en) bedeutet,

$R^1$ gleiche oder verschiedene Kohlenwasserstoffreste mit 1 bis 18 Kohlenstoffatom(en), die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und

n eine ganze Zahl von mindestens 30 ist.

Beispiele für Kohlenwasserstoffreste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Beispiele für substituierte Kohlenwasserstoffreste $R^1$ sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest und der 3-(Cyclohexylamino)propylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.

Bevorzugt als Reste $R^1$ sind Kohlenwasserstoffreste mit 1 bis 10 Kohlenstoffatom(en), wobei besonders bevorzugt mindestens 80 %, insbesondere mindestens 90 %, der Reste $R^1$ Methylreste sind.

Bevorzugte Reste R sind Wasserstoffatom und Alkylgruppen mit 1 bis 4 Kohlenstoffatom(en), wobei Wasserstoffatom, Methyl- und Ethylreste besonders bevorzugt sind.

Der Durchschnittswert für die Zahl n in Formel (I) ist vorzugsweise so gewählt, daß das Organopolysiloxan der Formel (I) eine Viskosität von mehr als 30 mPa•s, insbesondere von mehr als 10 000 mPa•s, jeweils gemessen bei einer Temperatur von 25 °C, besitzt.

Obwohl in Formel (I) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie $R^1_3SiO_{1/2}$-,$R^1SiO_{3/2}$- und $SiO_{4/2}$-Einheiten, ersetzt sein, wobei $R^1$ die vorstehend dafür angegebene Bedeutung hat.

Die Polydiorganosiloxane gemäß Formel (I) können nach in der Fachwelt bekannten Verfahren, beispielsweise durch Polymerisation bzw. Kondensation niedermolekularer cyclischer bzw. linearer, hydroxy- und/oder alkoxyendblockierter Organopolysiloxane, hergestellt werden.

Hierzu sei beispielsweise auf W. Noll, "Chemistry and Technology of Silicones", 1968, Academic Press Inc., Seite 218 ff verwiesen.

Bei dem erfindungsgemäß eingesetzten, kondensationsfähige Gruppen aufweisenden Organopolysiloxan (A) kann es sich um eine einzelne Art wie auch um ein Gemisch aus mindestens zwei Arten derartiger kondensationsfähige Gruppen aufweisender Organopolysiloxane handeln.

Bei dem erfindungsgemäß eingesetzten Kondensationskatalysator (B) handelt es sich vorzugsweise um (Organo-)Metallverbindungen, wie beispielsweise die Salze von Carbonsäuren, die Alkoholate und die Halogenide der Metalle Pb, Zn, Zr, Ti, Sb, Fe, Cd, Sn, Ba, Ca und Mn. Besonders bevorzugt sind (Organo-)Zinnverbindungen von Carbonsäuren mit 1 bis 18 Kohlenstoffatom(en) sowie (Organo-)Zinnhalogenide, insbesondere Organozinnoctoate, -naphthenate, -hexoate, -laurate, -acetate, -bromide und -chloride.

Beispiele für solche (Organo-)Zinnverbindungen sind Zinn(II)octoat, Dibutylzinndilaurat, Octylzinntriacetat, Dioctylzinndioctoat, Dioctylzinndiacetat, Didecylzinndiacetat, Dibutylzinndiacetat, Dibutylzinndibromid, Dioctylzinndilaurat, Trioctylzinnacetat. Ganz besonders bevorzugt sind Diorganozinndicarboxylate, insbesondere Dibutylzinndilaurat, Dioctylzinndilaurat, Dibutylzinndiacetat und Dioctylzinndiacetat.

Bei dem erfindungsgemäß eingesetzten Kondensationskatalysator (B) kann es sich um eine einzelne Art wie auch um ein Gemisch aus mindestens zwei Arten derartiger Kondensationskatalysatoren handeln.

Zur Herstellung der erfindungsgemäßen wäßrigen Dispersionen von Organopolysiloxanen wird Kondensationskatalysator (B) in Mengen von vorzugsweise 0,01 bis 7 Gewichtsteilen, besonders bevorzugt 0,05 bis 2,0 Gewichtsteilen, jeweils bezogen auf 100 Gewichtsteile kondensationsfähige Gruppen aufweisendes Organopolysiloxan (A), eingesetzt.

Das erfindungsgemäß eingesetzte Organopolysiloxanharz (C) ist vorzugsweise solches aus Einheiten der allgemeinen Formel

$$R^2{}_aSiO_{\frac{4-a}{2}} \qquad (II),$$

wobei $R^2$ eine der Bedeutungen wie $R^1$ hat und a eine Zahl mit einem durchschnittlichen Wert zwischen 0,5 und 1,95, insbesondere zwischen 0,8 und 1,8, bedeutet.

Obwohl durch die Formel (II) nicht ausgedrückt, kann das Organopolysiloxanharz, bedingt durch seine Herstellung, bis zu 10 Gewichtsprozent Si-gebundene Hydroxylgruppen und/oder Chloratome und/oder Alkoxygruppen enthalten.

Bevorzugte Reste $R^2$ in Formel (II) sind Methyl-, Ethyl-, Vinyl- und Phenylreste, insbesondere Methylreste.

Das erfindungsgemäß eingesetzte Organopolysiloxanharz (C) hat ein Molekulargewicht von bevorzugt höchstens 10 000, besonders bevorzugt höchstens 4 000.

Beispiele für die erfindungsgemäß eingesetzten Organopolysiloxanharze (C) sind solche aus Einheiten der Formel $[CH_3SiO_{3/2}]$ und $[(CH_3)_2SiO]$ (TD-Harz C) sowie solche aus Einheiten der Formel $[(CH_3)_3SiO_{1/2}]$ und $[SiO_{4/2}]$ (MQ-Harz C).

Besonders bevorzugt handelt es sich bei dem erfindungsgemäß eingesetzten Organopolysiloxanharz (C) um solches der Formel $[CH_3SiO_{3/2}]_{0,6-0,8}$ $[(CH_3)_2SiO]_{0,2-0,4}$ mit einem durchschnittlichen Molekulargewicht zwischen 2500 und 3500 sowie der Formel $[(CH_3)_3SiO_{1/2}]_{0,4-0,6}$ $[SiO_{4/2}]_{0,4-0,6}$ mit einem durchschnittlichen Molekulargewicht zwischen 200 und 10 000 (MQ-Harz C), insbesondere um $[CH_3SiO_{3/2}]_{0,6-0,8}$ $[(CH_3)_2SiO]_{0,2-0,4}$ mit einem durchschnittlichen Molekulargewicht zwischen 500 und 6 000.

Das erfindungsgemäß eingesetzte Organopolysiloxanharz (C) ist in einem Einsatzbereich von bis zu 50 Gewichtsprozent, bezogen auf das Gewicht an Organopolysiloxan (A), zumindest zum Teil, vorzugsweise jedoch völlig, in Organopolysiloxan (A) löslich.

Liegt der Gehalt an $[CH_3SiO_{3/2}]$-Einheiten im (TD-Harz C) unter etwa 40 Mol-%, so ist das (TD-Harz C) mehr oder weniger unbegrenzt in Organopolysiloxan (A) löslich. Mit einem steigenden Gehalt an $[CH_3SiO_{3/2}]$-Einheiten nimmt die Löslichkeit ab, wobei (TD-Harze C) mit einem Gehalt an $[CH_3SiO_{3/2}]$-Einheiten von etwa 80 Mol-% im allgemeinen immer noch in ausreichender Menge im Organopolysiloxan (A) löslich sind.

Liegt der Gehalt an $[(CH_3)_3SiO_{1/2}]$-Einheiten im (MQ-Harz C) über etwa 50 Mol-%, so ist das (MQ-Harz C) mehr oder weniger unbegrenzt in Organopolysiloxan (A) löslich.

Das erfindungsgemäß eingesetzte Organopolysiloxanharz (C) kann nach an sich bekannten Verfahren, wie beispielsweise durch Kondensation von niedermolekularen Organopolysiloxanharzen in Dispersion, hergestellt werden, wobei die niedermolekularen Organopolysiloxanharze darstellbar sind durch Solvolyse und Kondensation von einer Lösung der entsprechenden Silane mit Si-gebundenen Chloratomen in einem mit Wasser nicht mischbaren Lösungsmittel mittels eines Alkohol/Wasser-Gemisches. Hierzu sei beispielsweise auf W. Noll, "Chemistry and Technology of Silicones"; Academic Press, Orlando, 1968, Seiten 190 bis 208, verwiesen.

Bei dem erfindungsgemäß eingesetzten Organopolysiloxanharz (C) kann es sich um eine einzelne Art wie auch um ein Gemisch aus mindestens zwei Arten derartiger Organopolysiloxanharze handeln.

Zur Herstellung der erfindungsgemäßen wäßrigen Dispersionen von Organopolysiloxanen wird Organopolysiloxanharz (C) in Mengen von vorzugsweise 0,1 bis 100 Gewichtsteilen, besonders bevorzugt 0,5 bis 35 Gewichtsteilen, jeweils bezogen auf 100 Gewichtsteile kondensationsfähige Gruppen aufweisendes Organopolysiloxan (A), eingesetzt.

Bei den erfindungsgemäß eingesetzten, basischen Stickstoff aufweisenden Verbindungen (D) handelt es sich vorzugsweise um solche ausgewählt aus der Gruppe bestehend aus Verbindungen der Formel

$NR^3_3$ (III),

wobei $R^3$ gleich oder verschieden sein kann und Wasserstoffatom oder Kohlenwasserstoffreste mit 1 bis 18 Kohlenstoffatom(en), die gegebenenfalls mit Hydroxygruppen, Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet,
mit der Maßgabe, daß in Formel (III) höchstens zwei $R^3$ die Bedeutung von Wasserstoffatom haben,
aliphatische cyclische Amine, wie beispielsweise Piperidin und Morpholin sowie
Organosiliciumverbindungen mit mindestens einem basischen Stickstoff aufweisenden organischen Rest aus Einheiten der Formel

$$R^4_bY_cSi(OR^5)_dO_{\frac{4-b-c-d}{2}} \qquad (IV),$$

worin

- $R^4$ gleich oder verschieden sein kann und einen einwertigen, von basischem Stickstoff freien organischen Rest bedeutet
- $R^5$ gleich oder verschieden sein kann und Wasserstoffatom, einen Alkylrest, Alkalimetallkation, Ammonium- oder Phosphoniumgruppe bedeutet,
- Y gleich oder verschieden sein kann und einen einwertigen, SiC-gebundenen Rest mit basischem Stickstoff bedeutet,
- b 0, 1, 2, oder 3,
- c 0, 1, 2, 3 oder 4 und
- d 0, 1, 2 oder 3 ist,

mit der Maßgabe, daß die Summe aus b, c und d kleiner oder gleich 4 ist und pro Molekül mindestens ein Rest Y anwesend ist.

Bei Rest $R^4$ handelt es sich vorzugsweise um Kohlenwasserstoffreste mit 1 bis 18 Kohlenstoffatome(en), wobei der Methyl-, Ethyl- und Propylrest besonders bevorzugt sind, insbesondere der Methylrest.

Beispiele für Rest $R^4$ sind die für $R^1$ angegebenen Beispiele für Kohlenwasserstoffreste.

Vorzugsweise handelt es sich bei Rest $R^5$ um Wasserstoffatom, Methyl-, Ethylrest und Alkalimetallkation, wobei Wasserstoffatom, Methyl-, Ethylrest, Natrium- und Kaliumkation besonders bevorzugt sind.

Beispiele für Rest $R^5$ sind die für Rest R angegebenen Kohlenwasserstoffreste, die Kationen der Alkalimetalle, wie die von Lithium, Natrium, Kalium, Rubidium und Cäsium, sowie Reste der Formel

$^{+}NR^6{}_4$ (V)

oder

$^{+}PR^6{}_4$ (VI),

wobei $R^6$ gleich oder verschieden sein kann und Kohlenwasserstoffrest mit 1 bis 6 Kohlenstoffatom(en) bedeutet.

Vorzugsweise sind die Reste Y solche der Formel

$R^7{}_2NR^8$- (VII),

worin $R^7$ gleich oder verschieden sein kann und Wasserstoff, Alkyl-, Cycloalkyl- oder Aminoalkylreste bedeutet und $R^8$ zweiwertiger Kohlenwasserstoffrest bedeutet.

Die Beispiele für Alkyl- und Cycloalkylreste $R^1$ gelten im vollen Umfang auch für Alkyl- bzw. Cycloalkylreste $R^7$.

Vorzugsweise ist an jedes Stickstoffatom in den Resten der Formel (VII) mindestens ein Wasserstoffatom gebunden.

Bevorzugt handelt es sich bei Rest $R^8$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^8$ sind der Methylen-, Ethylen-, Propylen-, Butylen-, Cyclohexylen-, Octadecylen-, Phenylen- und Butenylenrest.

Beispiele für Reste Y sind
$H_2N(CH_2)_3$-,
$H_2N(CH_2)_2NH(CH_2)_2$-,
$H_2N(CH_2)_2NH(CH_2)_3$-,
$H_2N(CH_2)_2$-,
$H_3CNH(CH_2)_3$-,
$C_2H_5NH(CH_2)_3$-,
$H_3CNH(CH_2)_2$-,
$C_2H_5NH(CH_2)_2$-,
$H_2N(CH_2)_4$-,
$H_2N(CH_2)_5$-,
$H(NHCH_2CH_2)_3$-,
$C_4H_9NH(CH_2)_2NH(CH_2)_2$-,
cyclo-$C_6H_{11}NH(CH_2)_3$-,
cyclo-$C_6H_{11}NH(CH_2)_2$-,
$(CH_3)_2N(CH_2)_3$-,
$(CH_3)_2N(CH_2)_2$-,
$(C_2H_5)_2N(CH_2)_3$- und
$(C_2H_5)_2N(CH_2)_2$- .

Bevorzugt handelt es sich bei Y um $H_2N(CH_2)_3$-,$H_2N(CH_2)_2NH(CH_2)_3$-, $H_3CNH(CH_2)_3$-, $C_2H_5NH(CH_2)_3$- und cyclo-$C_6H_{11}NH(CH_2)_3$-, wobei $H_2N(CH_2)_2NH(CH_2)_3$- und cyclo-$C_6H_{11}NH(CH_2)_3$- besonders bevorzugt sind.

Handelt es sich bei den Organosiliciumverbindungen aus Einheiten der Formel (IV) um Silane, so ist b bevorzugt 0, 1 oder 2, besonders bevorzugt 0 oder 1, c bevorzugt 1 oder 2, besonders bevorzugt 1, und d bevorzugt 1, 2 oder 3, besonders bevorzugt 2 oder 3, mit der Maßgabe, daß die Summe aus b, c und d gleich 4 ist.

Beispiele für die erfindungsgemäßen Silane der Formel (IV) sind
$H_2N(CH_2)_3$-$Si(OCH_3)_3$

$H_2N(CH_2)_3$-$Si(OC_2H_5)_3$
$H_2N(CH_2)_3$-$Si(OCH_3)_2CH_3$
$H_2N(CH_2)_3$-$Si(OC_2H_5)_2CH_3$
$H_2N(CH_2)_3$-$Si(OH)_{3-x}(OM)_x$
$H_2N(CH_2)_3$-$Si(OH)_{2-y}(OM)_yCH_3$
$H_2N(CH_2)_2NH(CH_2)_3$-$Si(OCH_3)_3$
$H_2N(CH_2)_2NH(CH_2)_3$-$Si(OC_2H_5)_3$
$H_2N(CH_2)_2NH(CH_2)_3$-$Si(OCH_3)_2CH_3$
$H_2N(CH_2)_2NH(CH_2)_3$-$Si(OC_2H_5)_2CH_3$
$H_2N(CH_2)_2NH(CH_2)_3$-$Si(OH)_{3-x}(OM)_x$
$H_2N(CH_2)_2NH(CH_2)_3$-$Si(OH)_{2-y}(OM)_yCH_3$
cyclo-$C_6H_{11}NH(CH_2)_3$-$Si(OCH_3)_3$
cyclo-$C_6H_{11}NH(CH_2)_3$-$Si(OC_2H_5)_3$
cyclo-$C_6H_{11}NH(CH_2)_3$-$Si(OCH_3)_2CH_3$
cyclo-$C_6H_{11}NH(CH_2)_3$-$Si(OC_2H_5)_2CH_3$
cyclo-$C_6H_{11}NH(CH_2)_3$-$Si(OH)_{3-x}(OM)_x$ und
cyclo-$C_6H_{11}NH(CH_2)_3$-$Si(OH)_{2-y}(OM)_yCH_3$ ,
wobei
$H_2N(CH_2)_2NH(CH_2)_3$-$Si(OCH_3)_3$
$H_2N(CH_2)_2NH(CH_2)_3$-$Si(OC_2H_5)_3$
$H_2N(CH_2)_2NH(CH_2)_3$-$Si(OCH_3)_2CH_3$
$H_2N(CH_2)_2NH(CH_2)_3$-$Si(OC_2H_5)_2CH_3$
$H_2N(CH_2)_2NH(CH_2)_3$-$Si(OH)_{3-x}(ONa)_x$
$H_2N(CH_2)_2NH(CH_2)_3$-$Si(OH)_{2-y}(ONa)_yCH_3$
cyclo-$C_6H_{11}NH(CH_2)_3$-$Si(OCH_3)_3$
cyclo-$C_6H_{11}NH(CH_2)_3$-$Si(OC_2H_5)_3$
cyclo-$C_6H_{11}NH(CH_2)_3$-$Si(OCH_3)_2CH_3$
cyclo-$C_6H_{11}NH(CH_2)_3$-$Si(OC_2H_5)_2CH_3$
cyclo-$C_6H_{11}NH(CH_2)_3$-$Si(OH)_{3-x}(ONa)_x$ sowie
cyclo-$C_6H_{11}NH(CH_2)_3$-$Si(OH)_{2-y}(ONa)_yCH_3$ bevorzugt und
$H_2N(CH_2)_2NH(CH_2)_3$-$Si(OCH_3)_3$
$H_2N(CH_2)_2NH(CH_2)_3$-$Si(OCH_3)_2CH_3$
cyclo-$C_6H_{11}NH(CH_2)_3$-$Si(OCH_3)_3$
cyclo-$C_6H_{11}NH(CH_2)_3$-$Si(OCH_3)_2CH_3$
$H_2N(CH_2)_2NH(CH_2)_3$-$Si(OH)_{3-x}(ONa)_x$ und
$H_2N(CH_2)_2NH(CH_2)_3$-$Si(OH)_{2-y}(ONa)_yCH_3$ besonders bevorzugt sind, mit x gleich 0, 1, 2 oder 3, y gleich 0, 1 oder 2 und M gleich Kation des Natriums oder Kaliums.

Silane der Formel (IV) sind handelsübliche Produkte und können nach in der Siliciumchemie gängigen Verfahren hergestellt werden. Hierzu sei beispielsweise auf W. Noll "Chemie und Technologie der Silicone", 1968, Verlag Chemie, Seite 149 f, verwiesen.

Falls es sich bei der Organosiliciumverbindung aus Einheiten der Formel (IV) um Organopolysiloxane handelt, ist der durchschnittliche Wert von b vorzugsweise zwischen 0,5 und 2,5, besonders bevorzugt zwischen 1,4 und 2,0, der durchschnittliche Wert von c vorzugsweise zwischen 0,01 und 1,0, besonders bevorzugt zwischen 0,01 und 0,6 und der durchschnittliche Wert von d vorzugsweise zwischen 0 und 2,0, besonders bevorzugt zwischen 0 und 0,2, mit der Maßgabe, daß die Summe aus b, c und d kleiner oder gleich 3 ist.

Die erfindungsgemäß eingesetzten Organopolysiloxane aus Einheiten der Formel (IV) haben eine Viskosität bei 25 °C von vorzugsweise 5 bis $10^5$ mPa•s, besonders bevorzugt von 10 bis $10^4$ mPa•s.

Beispiele für die erfindungsgemäß eingesetzten Organopolysiloxane aus Einheiten der Formel (IV) sind

$$(CH_3)_3SiO\,[(CH_3)_2SiO]_k\,[CH_3\underset{\displaystyle |}{\overset{H_2N(CH_2)_2NH(CH_2)_3}{Si}}O]_m\,Si(CH_3)_3 \qquad (IVa)$$

und

$$\begin{array}{l} \qquad\qquad\qquad\qquad cyclo\text{-}C_6H_{11}NH(CH_2)_3 \\ \qquad\qquad\qquad\qquad\qquad\qquad\qquad\quad | \\ (CH_3)_3SiO\ [(CH_3)_2SiO]_k\ [CH_3SiO]_m\ Si(CH_3)_3 \end{array} \qquad (IVb),$$

wobei das Verhältnis von k zu m zwischen 2:3 und 9:1 und die Summe von k und m zwischen 10 und 1000 liegt,
sowie

$$\begin{array}{l} \quad H_2N(CH_2)_2NH(CH_2)_3 \\ \qquad\qquad\qquad\qquad\quad | \\ [(CH_3)_2SiO]_o\ [SiO_{3/2}]_p\ [(CH_3)_3SiO_{1/2}]_r \end{array} \qquad (IVc)\ und$$

$$\begin{array}{l} cyclo\text{-}C_6H_{11}NH(CH_2)_3 \\ \qquad\qquad\qquad\qquad\quad | \\ [(CH_3)_2SiO]_o\ [SiO_{3/2}]_p\ [(CH_3)_3SiO_{1/2}]_r \end{array} \qquad (IVd),$$

wobei die Summe aus o + p + r zwischen 10 und 1000, das Verhältnis von o : (o + p + r) zwischen 0 und 0,9, insbesondere zwischen 0,2 und 0,7, das Verhältnis von p : (o + p + r) zwischen 0,05 und 0,6, insbesondere zwischen 0,1 und 0,5, und das Verhältnis von r : (o + p + r) zwischen 0,05 und 0,75, insbesondere zwischen 0,2 und 0,6, liegt.

Bevorzugt handelt es sich bei dem erfindungsgemäß eingesetzten Organopolysiloxan aus Einheiten der Formel (IV) um Organopolysiloxane der Formeln (IVa), (IVb), (IVc) und (IVd), mit einer Viskosität von 20 bis 100 000 mPa•s und einer Aminzahl von 0,01 bis 4,5, wobei solche Organopolysiloxane mit einer Viskosität von 100 bis 10 000 mPa•s und einer Aminzahl von 0,1 bis 1,5 besonders bevorzugt sind.

Die Aminzahl entspricht zahlenmäßig dem Wert, der den Verbrauch in ml von 1-n HCl bei der Neutralisation von 1 g Aminosiloxan angibt.

Organopolysiloxane aus Einheiten der Formel (IV) sind handelsübliche Produkte und können nach in der Siliciumchemie gängigen Verfahren hergestellt werden. Hierzu sei beispielsweise auf W. Noll, "Chemie und Technologie der Silicone", 1968, Verlag Chemie, Seite 194 ff, verwiesen.

Beispiele für Amine der Formel (III) sind Cyclohexylamin, Triethylamin, Dodecylamin, Diethyl-n-propylamin, Cyclohexylmethylamin, 2-Aminoethanol, 2-Amino-n-propanol, 2-Amino-2-methyl-1-propanol, 2-Dimethylamino-2-methyl-1-propanol, N,N-Diethylethanolamin, N,N-Dimethylethanolamin und Anilin, wobei Dodecylamin, 2-Aminoethanol und 2-Amino-2-methyl-1-propanol bevorzugt und 2-Amino-2-methyl-1-propanol besonders bevorzugt sind.

Bevorzugt werden als Konponente (D) Organosiliciumverbindungen mit mindestens einem basischen Stickstoff aufweisenden organischen Rest aus Einheiten der Formel (IV), insbesondere Kalium-N-(2-aminoethyl)-3-aminopropylmethylsilanolat, Natrium-N-(2-aminoethyl)-3-aminopropylmethylsilanolat, sowie Verbindungen der Formeln (IVa) und (IVc) eingesetzt.

Bei der erfindungsgemäß eingesetzten basischen Stickstoff aufweisenden Verbindung (D) kann es sich um eine einzelne Art wie auch um ein Gemisch aus mindestens zwei Arten derartiger Verbindungen handeln.

Zur Herstellung der erfindungsgemäßen wäßrigen Dispersionen von Organopolysiloxanen wird basischen Stickstoff aufweisende Verbindung (D) in Mengen von vorzugsweise 0,1 bis 5,0 Gewichtsteilen, besonders bevorzugt 0,5 bis 2,0 Gewichtsteilen, jeweils bezogen auf 100 Gewichtsteile kondensationsfähige Gruppen aufweisendes Organopolysiloxan (A), eingesetzt.

Zur Herstellung der erfindungsgemäßen wäßrigen Dispersionen von Organopolysiloxanen wird Komponente (E) in Mengen von vorzugsweise 0,5 bis 10 Gewichtsteilen, besonders bevorzugt 1 bis 5 Gewichtsteilen, jeweils bezogen auf 100 Gewichtsteile kondensationsfähige Gruppen aufweisendes Organopolysiloxan (A), eingesetzt.

Ferner können die erfindungsgemäßen wäßrigen Dispersionen von Organopolysiloxanen weitere Komponenten, vorzugsweise ausgewählt aus der Gruppe der Weichmacher, Schaumverhütungsmittel, Pigmente, löslichen Farbstoffe, Fungizide, Riechstoffe sowie der organischen, in bezug auf die Dispersionen inerten Lösungsmittel, enthalten.

Beispiele für Weichmacher sind bei Raumtemperatur flüssige, durch Trimethylsiloxygruppen endblockierte Dimethylpolysiloxane mit einer Viskosität von mindestens 10 mPa•s.

Beispiele für organische, in bezug auf die Dispersionen inerte Lösungsmittel sind Kohlenwasserstoffe, wie Petrolether verschiedener Siedebereiche, n-Pentan, n-Hexan, Hexan-Isomerengemisch, Toluol und Xylol.

Von jeder der vorstehend als weitere Komponente für die erfindungsgemäßen wäßrigen Dispersionen genannten Gruppen von Stoffen kann jeweils als eine Komponente ein Stoff dieser Gruppe oder auch ein Gemisch aus mindestens zwei verschiedenen dieser Stoffe verwendet werden.

Bei den erfindungsgemäßen wäßrigen Dispersionen von Organopolysiloxanen werden Feststoffgehalte von bis zu 90 Gewichtsprozent erreicht. Als Feststoffgehalt ist hier der Gewichtsanteil aller Bestandteile der Dispersion außer Wasser und, falls verwendet, organischem Lösungsmittel am Gesamtgewicht der Dispersion zu verstehen. Vorzugsweise haben die erfindungsgemäßen wäßrigen Dispersionen von Organopolysiloxanen Feststoffgehalte von 30 bis 90 Gewichtsprozent, besonders bevorzugt von 40 bis 85 Gewichtsprozent. Niedrigere Feststoffgehalte sind selbstverständlich möglich, jedoch wirtschaftlich wenig sinnvoll.

Die erfindungsgemäßen wäßrigen Dispersionen von Organopolysiloxanen können in der gleichen Weise hergestellt werden, in der auch bisher wäßrige Dispersionen von Organopolysiloxanen hergestellt werden.

Die bevorzugte Arbeitsweise zur Herstellung der erfindungsgemäßen wäßrigen Dispersionen besteht darin, daß Organopolysiloxanharz (C) in dem kondensationsfähige Gruppen aufweisenden Organopolysiloxan (A) gelöst wird und mit Polyvinylalkohol (E) und Wasser sowie gegebenenfalls den weiteren Komponenten emulgiert wird.

Die übrigen Komponenten werden, falls sie wasserlöslich sind, entweder gleich in dem zum Emulgieren verwendeten Wasser gelöst oder der wäßrigen Dispersion zugesetzt. Die wasserunlöslichen Komponenten werden entweder als Dispersion eingesetzt oder zusammen mit der Lösung von Komponente (C) und Komponente (A) emulgiert.

Das Emulgieren bzw. Dispergieren kann in üblichen, zur Herstellung von Emulsionen bzw. Dispersionen geeigneten Mischgeräten, wie beispielsweise schnellaufenden Stator-Rotor-Rührgeräten nach Prof. P. Willems, bekannt unter dem registrierten Warenzeichen "Ultra-Turrax", erfolgen. Hierzu sei noch auf Ullmanns Encyklopädie der Technischen Chemie, Urban & Schwarzenberg, München, Berlin, 3. Auflage, Band 1, Seite 720 ff, verwiesen.

Die erfindungsgemäßen wäßrigen Dispersionen von Organopolysiloxanen können für alle Zwecke eingesetzt werden, für die auch bisher wäßrige Dispersionen von Organopolysiloxanen verwendet werden. Sie können beispielsweise als Dichtungsmassen, Farben, Anstrichsysteme und als elektrisch isolierende bzw. leitende, hydrophobe, klebrige Stoffe abweisende Beschichtungssysteme oder als Grundlage bzw. Zusätze zu solchen Systemen dienen.

Die erfindungsgemäßen wäßrigen Dispersionen von Organopolysiloxanen härten schon bei Raumtemperatur innerhalb kurzer Zeit nach Verdampfen des Lösungsmittelanteils, Wassers und ggf. organischen Lösungsmittels, zu Elastomeren aus.

Die erfindungsgemäßen wäßrigen Dispersionen, insbesondere solche, die unter Verwendung von Polyvinylalkoholen hergestellt wurden, haben den Vorteil, daß sie in dünnen Schichten zu transparenten Elastomeren aushärten.

Die erfindungsgemäßen wäßrigen Dispersionen haben den weiteren Vorteil, daß sie auf vielen Substraten, wie beispielsweise Papier, Textilien, mineralischen Baustoffen, Kunststoffen, Holz und vielen anderen Unterlagen, festhaftende Überzüge bilden. Das Beschichten kann dabei z.B. durch Streichen, Walzen, Tauchen oder Spritzen erfolgen.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 22°C, bzw. bei einer Temperatur, die sich beim Zusammengeben der Reaktanden bei Raumtemperatur ohne zusätzliche Heizung oder Kühlung einstellt, durchgeführt.

Die Elastomereigenschaften werden jeweils nach den folgenden, genormten Prüfungen ermittelt:

| | |
|---|---|
| Reißfestigkeit | : DIN 53504-85S1 |
| Reißdehnung | : DIN 53504-85S1 |
| Modul | : DIN 53504-85S1 |

Shore-A-Härte : DIN 53505-87
Weiterreißfestigkeit : ASTM D624B-73

**Beispiel 1**

I) Herstellung einer wäßrigen Lösung von Kalium-N-(2-aminoethyl)-3-aminopropylmethylsilanolat

Zu einer Lösung von 63,7 g Kaliumhydroxyd (88 %ig in Wasser) in 200 g Wasser werden unter kräftigem Rühren 103 g N-(2-Aminoethyl)-3-aminopropylmethyldimethoxysilan (käuflich erhältlich unter der Bezeichnung "Silan GF 95" bei der Wacker-Chemie GmbH, München) zudosiert. Von der Mischung werden durch Erhitzen erst Methanol und dann etwa 70 g Wasser abdestilliert. Anschließend wird die Mischung durch Zugabe von Wasser auf 317 g Gesamtgewicht aufgefüllt. Es resultiert eine 40 prozentige Kalium-N-(2-aminoethyl)-3-aminopropylmethylsilanolatlösung.

II) Herstellung einer wäßrigen Dispersion von Kondensationskatalysator (B)

125 g Dibutylzinndilaurat werden zusammen mit 10 g Tributylphenolpolyglycolether (käuflich erhältlich unter der Bezeichnung "Sagopenat T130" bei der Hoechst AG) und 365 g Wasser emulgiert.

200 g $\alpha,\omega$-Dihydroxypolydimethylsiloxan mit einer Viskosität von 80 000 mPa•s und 5,00 g $[CH_3SiO_{3/2}]_{0,8}$ $[(CH_3)_2SiO]_{0,2}$ mit einem durchschnittlichen Molekulargewicht von 3000 werden vermischt. Anschließend wird die Mischung mit 25,0 g Wasser und 50 g einer 10 %igen Lösung eines Polyvinylalkohols mit einem Molekulargewicht von 85 000 und einer Verseifungszahl von 240 (käuflich erhältlich unter der Bezeichnung "Polyviol W 30/240" bei der Wacker-Chemie GmbH) in Wasser mit Hilfe eines Ultra-Turrax-Mischers in eine Emulsion überführt. Nach Hinzufügen von 2,8 g der oben unter I beschriebenen wäßrigen Lösung von Kalium-N-(2-aminoethyl)-3-amino-propylmethylsilanolat und 1,4 g der oben unter II beschriebenen wäßrigen Dispersion von Kondensationskatalysator (B) wird eine weiße, standfeste wäßrige Dispersion erhalten, die mindestens 6 Monate lagerfähig ist.

Aus der so erhaltenen wäßrigen Dispersion wird 200 Stunden nach ihrer Herstellung ein 2 mm dicker Film erzeugt, indem die wäßrige Dispersion auf eine Oberfläche aus Polytetrafluorethylen (PTFE) aufgetragen und das Wasser bei Raumtemperatur verdampfen gelassen wird. Zwei Wochen nach dem Auftragen bildet sich ein trockener, transparenter und elastischer Film, der auf seine Elastomereigenschaften hin untersucht wird. Die Ergebnisse der Untersuchungen finden sich in Tabelle 1.

**Beispiel 2**

200 g $\alpha,\omega$-Dihydroxypolydimethylsiloxan mit einer Viskosität von 80 000 mPa•s und 5,00 g $[CH_3SiO_{3/2}]_{0,8}$ $[(CH_3)_2SiO]_{0,2}$ mit einem durchschnittlichen Molekulargewicht von 3000 werden vermischt. Anschließend wird die Mischung mit 25,0 g Wasser und 50 g einer 10 %igen Lösung eines Polyvinylalkohols mit einem Molekulargewicht von 36 000 und einer Verseifungszahl von 20 (käuflich erhältlich unter der Bezeichnung "Polyviol G 10/20" bei der Wacker-Chemie GmbH) in Wasser mit Hilfe eines Ultra-Turrax-Mischers in eine Emulsion überführt. Nach Hinzufügen von 2,8 g 3-(2-Aminoethylamino)propyl-funktionellem Polydimethylsiloxan mit einer Viskosität von 1000 mPa•s und einer Aminzahl von 0,3 (käuflich erhältlich unter der Bezeichnung "Finish WR 1300" bei der Wacker-Chemie GmbH, München) und 1,4 g der in Beispiel 1 unter II beschriebenen wäßrigen Dispersion von Kondensationskatalysator (B) wird eine weiße, standfeste wäßrige Dispersion erhalten, die mindestens 6 Monate lagerfähig ist.

Aus der so erhaltenen wäßrigen Dispersion wird 200 Stunden nach ihrer Herstellung ein 2 mm dicker Film erzeugt, indem die wäßrige Dispersion auf eine Oberfläche aus Polytetrafluorethylen (PTFE) aufgetragen und das Wasser bei Raumtemperatur verdampfen gelassen wird. Zwei Wochen nach dem Auftragen bildet sich ein trockener, transparenter und elastischer Film, der auf seine Elastomereigenschaften hin untersucht wird. Die Ergebnisse der Untersuchungen finden sich in Tabelle 1.

**Beispiel 3**

200 g $\alpha,\omega$-Dihydroxypolydimethylsiloxan mit einer Viskosität von 80 000 mPa•s und 8,00 g $[CH_3SiO_{3/2}]_{0,8}$ $[(CH_3)_2SiO]_{0,2}$ mit einem durchschnittlichen Molekulargewicht von 3000 werden vermischt. Anschließend wird die Mischung mit 25,0 g Wasser und 50 g einer 10 %igen Lösung eines Polyvinylalkohols mit einem Molekulargewicht von 36 000 und einer Verseifungszahl von 20 (käuflich erhältlich unter der Bezeichnung "Polyviol G 10/20" bei der Wacker-Chemie GmbH) in Wasser mit Hilfe eines Ultra-Turrax-Mischers in eine

Emulsion überführt. Nach Hinzufügen von 2,8 g 3-(2-Aminoethylamino)propyl-funktionellem Polydimethylsiloxan mit einer Viskosität von 1000 mPa•s und einer Aminzahl von 0,3 (käuflich erhältlich unter der Bezeichnung "Finish WR 1300" bei der Wacker-Chemie GmbH, München) und 1,4 g der in Beispiel 1 unter II beschriebenen wäßrigen Dispersion von Kondensationskatalysator (B) wird eine weiße, standfeste wäßrige Dispersion erhalten, die mindestens 6 Monate lagerfähig ist.

Aus der so erhaltenen wäßrigen Dispersion wird 200 Stunden nach ihrer Herstellung ein 2 mm dicker Film erzeugt, indem die wäßrige Dispersion auf eine Oberfläche aus Polytetrafluorethylen (PTFE) aufgetragen und das Wasser bei Raumtemperatur verdampfen gelassen wird. Zwei Wochen nach dem Auftragen bildet sich ein trockener, transparenter und elastischer Film, der auf seine Elastomereigenschaften hin untersucht wird. Die Ergebnisse der Untersuchungen finden sich in Tabelle 1.

Tabelle 1

| Versuch | Reißfestigkeit ($N/mm^2$) | Reißdehnung (%) | Modul[1)] ($N/mm^2$) | Shore-A -Härte | Weiterreißfestigkeit (N/mm) |
|---|---|---|---|---|---|
| 1 | 1,1 | 340 | 0,6 | 28 | 4,6 |
| 2 | 0,9 | 300 | 0,4 | 22 | 4,0 |
| 3 | 0,9 | 220 | 0,7 | 35 | 4,1 |

**Vergleichsbeispiel 1**

200 g $\alpha,\omega$-Dihydroxypolydimethylsiloxan mit einer Viskosität von 80 000 mPa•s und 5,00 g $[CH_3SiO_{3/2}]_{0,8}$ $[(CH_3)_2SiO]_{0.2}$ mit einem durchschnittlichen Molekulargewicht von 3000 werden vermischt. Anschließend wird die Mischung mit 70,0 g Wasser und 8,25 g Polyethylenglykol-(10)-isotridecylether (käuflich erhältlich unter der Bezeichnung "Arlypon IT 10" der Fa. Grünau) mit Hilfe eines Ultra-Turrax-Mischers in eine Emulsion überführt. Nach Hinzufügen von 2,8 g der in Beispiel 1 unter I beschriebenen wäßrigen Lösung von Kalium-N-(2-aminoethyl)-3-aminopropylmethylsilanolat und 1,4 g der in Beispiel 1 unter II beschriebenen wäßrigen Dispersion von Kondensationskatalysator (B) wird eine weiße, standfeste wäßrige Dispersion erhalten, die mindestens 6 Monate lagerfähig ist.

Aus der so erhaltenen wäßrigen Dispersion wird 200 Stunden nach ihrer Herstellung ein 2 mm dicker Film erzeugt, indem die wäßrige Dispersion auf eine Oberfläche aus Polytetrafluorethylen (PTFE) aufgetragen und das Wasser bei Raumtemperatur verdampfen gelassen wird. Zwei Wochen nach dem Auftragen bildet sich ein trockener, trüber und elastischer Film.

**Vergleichsbeispiel 2**

Die in Vergleichsbeispiel 1 beschriebene Verfahrensweise wird wiederholt mit der Abänderung, daß anstelle von 8,25 g Polyethylenglykol-(10)-isotridecylether 8,25 g Natriumdodecylbenzolsulfonat eingesetzt wird. Es wird eine weiße, standfeste wäßrige Dispersion erhalten, die mindestens 6 Monate lagerfähig ist.

Aus der so erhaltenen wäßrigen Dispersion wird 200 Stunden nach ihrer Herstellung ein 2 mm dicker Film erzeugt, indem die wäßrige Dispersion auf eine Oberfläche aus Polytetrafluorethylen (PTFE) aufgetragen und das Wasser bei Raumtemperatur verdampfen gelassen wird. Zwei Wochen nach dem Auftragen bildet sich ein trockener, trüber und elastischer Film.

**Patentansprüche**

1. Wäßrige Dispersionen von Organopolysiloxanen, herstellbar unter Verwendung der Ausgangsstoffe
   (A) kondensationsfähige Gruppen aufweisendes Organopolysiloxan,
   (B) Kondensationskatalysator,
   (C) Organopolysiloxanharz mit einem Molekulargewicht von maximal 20 000,
   (D) basischen Stickstoff aufweisende Verbindungen und
   (E) Polyvinylalkohol, wobei A, C und D verschieden sind.

2. Wäßrige Dispersionen gemäß Anspruch 1, dadurch gekennzeichnet, daß Polyvinylalkohol (E) in Mengen von vorzugsweise 0,5 bis 10 Gewichtsteilen, bezogen auf 100 Gewichtsteile kondensationsfähige Gruppen aufweisendes Organopolysiloxan (A), eingesetzt wird.

3. Wäßrige Dispersionen gemäß Anspruch 1 oder 2, dadurch gekennzeichnet, daß als Polyvinylalkohol (E) solcher mit einem Molekulargewicht zwischen 20 000 und 100 000 und einer Verseifungszahl von größer 100 eingesetzt wird.

4. Wäßrige Dispersionen gemäß einem oder mehreren der Ansprüche 1 bis 3, dadurch gekennzeichnet, daß als kondensationsfähige Gruppen aufweisende Organopolysiloxane (A) solche der Formel

$RO\text{-}[SiR^1{}_2O]_n\text{-}R$ (I),

worin
- R gleich oder verschieden sein kann und Wasserstoffatom oder Alkylrest mit 1 bis 6 Kohlenstoffatom(en) bedeutet,
- $R^1$ gleiche oder verschiedene Kohlenwasserstoffreste mit 1 bis 18 Kohlenstoffatom(en), die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
- n eine ganze Zahl von mindestens 30 ist,

eingesetzt werden.

5. Wäßrige Dispersionen gemäß einem oder mehreren der Ansprüche 1 bis 4, dadurch gekennzeichnet, daß als Organopolysiloxanharz (C) solches aus Einheiten der allgemeinen Formel

$$R^2{}_aSiO_{\frac{4-a}{2}} \quad (II),$$

wobei
- $R^2$ gleiche oder verschiedene Kohlenwasserstoffreste mit 1 bis 18 Kohlenstoffatom(en), die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
- a eine Zahl mit einem durchschnittlichen Wert zwischen 0,5 und 1,95 bedeutet,

eingesetzt wird.

6. Wäßrige Dispersionen gemäß einem oder mehreren der Ansprüche 1 bis 5, dadurch gekennzeichnet, daß das Organopolysiloxanharz (C) ein Molekulargewicht von höchstens 10 000 hat.

7. Wäßrige Dispersionen gemäß einem oder mehreren der Ansprüche 1 bis 6, dadurch gekennzeichnet, daß als Organopolysiloxanharz (C) solches der Formel $[CH_3SiO_{3/2}]_{0,6-0,8}$ $[(CH_3)_2SiO]_{0,2-0,4}$ mit einem durchschnittlichen Molekulargewicht zwischen 500 und 6 000 eingesetzt wird.

8. Wäßrige Dispersionen gemäß einem oder mehreren der Ansprüche 1 bis 7, dadurch gekennzeichnet, daß Organopolysiloxanharz (C) in Mengen von 0,1 bis 100 Gewichtsteilen, bezogen auf 100 Gewichtsteile kondensationsfähige Gruppen aufweisendes Organopolysiloxan (A), eingesetzt wird.

9. Wäßrige Dispersionen gemäß einem oder mehreren der Ansprüche 1 bis 8, dadurch gekennzeichnet, daß es sich bei der Komponente (D) um Organosiliciumverbindungen mit mindestens einem basischen Stickstoff aufweisenden organischen Rest aus Einheiten der Formel

$$R^4{}_bY_cSi(OR^5)_dO_{\frac{4-b-c-d}{2}} \quad (IV),$$

handelt, worin
- $R^4$ gleich oder verschieden sein kann und einen einwertigen, von basischem Stickstoff freien

organischen Rest bedeutet,

$R^5$ gleich oder verschieden sein kann und Wasserstoffatom, einen Alkylrest, Alkalimetallkation, Ammonium- oder Phosphoniumgruppe bedeutet,

Y gleich oder verschieden sein kann und einen einwertigen, SiC-gebundenen Rest mit basischem Stickstoff bedeutet,

b 0, 1, 2, oder 3,

c 0, 1, 2, 3 oder 4 und

d 0, 1, 2 oder 3 ist,

mit der Maßgabe, daß die Summe aus b, c und d kleiner oder gleich 4 ist und pro Molekül mindestens ein Rest Y anwesend ist.

**10.** Verfahren zur Herstellung von wäßrigen Dispersionen gemäß einem oder mehreren der Ansprüche 1 bis 9, dadurch gekennzeichnet, daß Organopolysiloxanharz (C) in dem kondensationsfähige Gruppen aufweisenden Organopolysiloxan (A) gelöst wird und mit Polyvinylalkohol (E) und Wasser sowie gegebenenfalls den weiteren Komponenten emulgiert wird.

## Claims

**1.** Aqueous dispersions of organopolysiloxanes which can be prepared using the starting substances
(A) organopolysiloxane containing groups which can undergo condensation,
(B) condensation catalyst,
(C) organopolysiloxane resin haying a molecular weight of not more than 20,000,
(D) compounds containing basic nitrogen and
(E) polyvinyl alcohol, A, C and D being different.

**2.** Aqueous dispersions according to Claim 1, characterized in that the polyvinyl alcohol (E) is employed in amounts of preferably 0.5 to 10 parts by weight per 100 parts by weight of organopolysiloxane (A) containing groups which can undergo condensation.

**3.** Aqueous dispersions according to Claim 1 or 2, characterized in that the polyvinyl alcohol (E) employed is one having a molecular weight of between 20,000 and 100,000 and a hydrolysis number of more than 100.

**4.** Aqueous dispersions according to one or more of Claims 1 to 3, characterized in that the organopolysiloxanes (A) containing groups which can undergo condensation which are employed are those of the formula

$$RO\text{-}[SiR^1{}_2O]_n\text{-}R \qquad (I),$$

wherein

R can be identical or different and denotes a hydrogen atom or alkyl radical having 1 to 6 carbon atom(s),

$R^1$ denotes identical or different hydrocarbon radicals having 1 to 18 carbon atom(s), which are optionally substituted by halogen atoms, amino groups, ether groups, ester groups, epoxy groups, mercapto groups, cyano groups or (poly)glycol radicals, the latter being built up from oxyethylene and/or oxypropylene units, and

n is an integer of at least 30.

**5.** Aqueous dispersions according to one or more of Claims 1 to 4, characterized in that the organopolysiloxane resin (C) which is employed is one consisting of units of the formula

$$R^2{}_aSiO_{\frac{4-a}{2}} \qquad (II),$$

wherein

$R^2$ denotes identical or different hydrocarbon radicals having 1 to 18 carbon atom(s), which are optionally substituted by halogen atoms, amino groups, ether groups, ester groups, epoxy

groups, mercapto groups, cyano groups or (poly)glycol radicals, the latter being built up from oxyethylene units and/or oxypropylene units, and

a denotes a number having an average value between 0.5 and 1.95.

**6.** Aqueous dispersions according to one or more of Claims 1 to 5, characterized in that the organopolysiloxane resin (C) has a molecular weight of not more than 10,000.

**7.** Aqueous dispersions according to one or more of Claims 1 to 6, characterized in that the organopolysiloxane resin (C) which is employed is one of the formula $[CH_3SiO_{3/2}]_{0.6-0.8}$ $[(CH_3)_2SiO]_{0.2-0.4}$ having an average molecular weight of between 500 and 6000.

**8.** Aqueous dispersions according to one or more of Claims 1 to 7, characterized in that the organopolysiloxane resin (C) is employed in amounts of 0.1 to 100 parts by weight per 100 parts by weight of organopolysiloxane (A) containing groups which can undergo condensation.

**9.** Aqueous dispersions according to one or more of Claims 1 to 8, characterized in that component (D) is organosilicon compounds which have at least one organic radical containing basic nitrogen and are built up from units of the formula

$$R^4_bY_cSi(OR^5)_dO_{\frac{4-b-c-d}{2}} \quad (IV),$$

wherein

- $R^4$ can be identical or different and is a monovalent organic radical which is free from basic nitrogen,
- $R^5$ can be identical or different and denotes a hydrogen atom, an alkyl radical, an alkali metal cation or an ammonium or phosphonium group,
- Y can be identical or different and denotes a monovalent SiC-bonded radical containing basic nitrogen,
- b is 0, 1, 2, or 3,
- c is 0, 1, 2, 3 or 4 and
- d is 0, 1, 2 or 3,

with the proviso that the sum of b, c and d is less than or equal to 4 and at least one radical Y is present per molecule.

**10.** Process for the preparation of aqueous dispersions according to one or more of Claims 1 to 9, characterized in that the organopolysiloxane resin (C) is dissolved in the organopolysiloxane (A) containing groups which can undergo condensation and the solution is emulsified with polyvinyl alcohol (E) and water and if appropriate the other components.

**Revendications**

**1.** Dispersions aqueuses d'organopolysiloxanes pouvant être préparées au moyen des matières de départ :

(A) un organopolysiloxane présentant des groupes capables de condensation,
(B) un catalyseur de condensation,
(C) une résine organopolysiloxane d'un poids moléculaire maximal de 20 000,
(D) des composés présentant un azote basique, et
(E) un poly(alcool vinylique), où A, C et D sont différents.

**2.** Dispersions aqueuses suivant la revendication 1, caractérisées en ce que le poly(alcool vinylique) (E) est introduit, de préférence, en des quantités de 0,5 à 10 parties en poids, rapportées à 100 parties en poids d'organopolysiloxane (A) présentant des groupes capables de condensation.

**3.** Dispersions aqueuses suivant la revendication 1 ou 2, caractérisées en ce que l'on introduit un poly-(alcool vinylique) (E) de poids moléculaire compris entre 20 000 et 100 000 et avec un indice de

saponification supérieur à 100.

**4.** Dispersions aqueuses suivant l'une ou plusieurs des revendications 1 à 3, caractérisées en ce que l'on introduit un organopolysiloxane (A) présentant des groupes capables de condensation de formule :

$RO - [SiR^1{}_2O]_n - R$ (I)

où :

R peut être identique ou différent et représente un atome d'hydrogéne ou un radical alcoyle de 1 à 6 atome(s) de carbone;

$R^1$ représente des radicaux hydrocarbure identiques ou différents, de 1 à 18 atomes de carbone, qui sont facultativement substitués par des atomes d'halogène, des radicaux amino, éther, ester, époxy, mercapto, cyano ou (poly)glycol, où ces derniers sont construits à partir d'unités oxyéthylène et/ou oxypropylène, et

n est un nombre entier d'au moins 30.

**5.** Dispersions aqueuses suivant l'une ou plusieurs des revendications 1 à 4, caractérisées en ce que l'on introduit une résine organopolysiloxane (C) composée d'unités de formule générale

$$R^2{}_aSiO_{\frac{(4-a)}{2}} \qquad (II)$$

où

$R^2$ représente des radicaux hydrocarbure identiques ou différents, de 1 à 18 atome(s) de carbone, qui peuvent être facultativement substitués par des atomes d'halogène, des radicaux amino, des radicaux éther, des radicaux ester, des radicaux époxy, des radicaux mercapto, des radicaux cyano ou des radicaux (poly)glycol, où ces derniers sont construits à partir d'unités oxyéthylène et/ou oxypropylène, et

a représente un nombre d'une valeur moyenne comprise entre 0,5 et 1,95.

**6.** Dispersions aqueuses suivant l'une ou plusieurs des revendications 1 à 5, caractérisées en ce que la résine organopolysiloxane (C) a un poids moléculaire d'au plus 10 000.

**7.** Dispersions aqueuses suivant l'une ou plusieurs des revendications 1 à 6, caractérisées en ce que l'on introduit une résine organopolysiloxane (C) de formule $[CH_3SiO_{3/2}]_{0,6-0,8}[(CH_3)_2SiO]_{0,2-0,4}$ avec un poids moléculaire moyen compris entre 500 et 6000.

**8.** Dispersions aqueuses suivant l'une ou plusieurs des revendications 1 à 7, caractérisées en ce que l'on introduit une résine organopolysiloxane (C) en des quantités allant de 0,1 à 100 parties en poids, rapportées à 100 parties en poids d'un organopolysiloxane (A) présentant des groupes capables de condensation.

**9.** Dispersions aqueuses suivant l'une ou plusieurs des revendications 1 à 8, caractérisées en ce que le composant (D) consiste en un composé organosilicique avec au moins un radical organique présentant un azote basique, d'unités de formule

$$R^4{}_bY_cSi(OR^5)_dO_{\frac{4-b-c-d}{2}} \qquad (IV)$$

où

$R^4$ peut être identique ou différent et représente un radical organique exempt d'azote basique,

$R^5$ peut être identique ou différent et représente un atome d'hydrogène, un radical alcoyle ou un groupe ammonium ou phosphonium à cation de métal alcalin;

Y peut être identique ou différent et représente un radical monovalent à liaison Si-C avec un azote basique,

b représente 0, 1, 2 ou 3,
c représente 0, 1, 2, 3 ou 4, et
d est 0, 1, 2 ou 3,
pourvu que la somme de b, c et d soit inférieure ou égale à 4 et qu'il y ait au moins un radical Y par molécule.

**10.** Procédé de préparation de dispersions aqueuses suivant l'une ou plusieurs des revendications 1 à 9, caractérisé en ce que la résine organopolysiloxane (C) est dissoute dans l'organopolysiloxane (A) présentant des groupes capables de condensation et est émulsionnée avec le poly(alcool vinylique) (E) et l'eau, ainsi que, facultativement, les autres composants.